(19) Europäisches Patentamt
European Patent Office
Office européen des brevets

(11) EP 4 174 113 A1

(12) **EUROPEAN PATENT APPLICATION**
published in accordance with Art. 153(4) EPC

(43) Date of publication:
**03.05.2023 Bulletin 2023/18**

(21) Application number: **21834680.7**

(22) Date of filing: **04.06.2021**

(51) International Patent Classification (IPC):
***C08G 81/00*** *(2006.01)* ***C08K 7/06*** *(2006.01)*
***C08K 9/04*** *(2006.01)* ***C08L 69/00*** *(2006.01)*
***C08J 5/04*** *(2006.01)* ***B29C 70/06*** *(2006.01)*

(52) Cooperative Patent Classification (CPC):
**B29C 70/06; C08G 81/00; C08J 5/04; C08K 7/06; C08K 9/04; C08L 69/00**

(86) International application number:
**PCT/JP2021/021363**

(87) International publication number:
**WO 2022/004275 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 JP 2020113009**

(71) Applicant: **Idemitsu Kosan Co., Ltd**
**Tokyo 100-8321 (JP)**

(72) Inventors:
- **MATSUDA, Takeshi**
  **Sodegaura-shi, Chiba 299-0265 (JP)**
- **YASUDA, Hiroshi**
  **Ichihara-shi, Chiba 299-0193 (JP)**

(74) Representative: **Hoffmann Eitle**
**Patent- und Rechtsanwälte PartmbB**
**Arabellastraße 30**
**81925 München (DE)**

(54) **RESIN COMPOSITION, MOLDED BODY, AND METHOD FOR IMPROVING CHARACTERISTICS OF RESIN COMPOSITION**

(57) A resin composition comprising apolycarbonate-polyorganosiloxane copolymer (A) comprising a polycarbonate block (A-1) comprising a repeating unit represented by the following general formula (I) and a polyorganosiloxane block (A-2) comprising a repeating unit represented by the following general formula (II); and carbon fibers (B), the carbon fibers (B) being carbon fibers to which a compound having an epoxy group is attached:

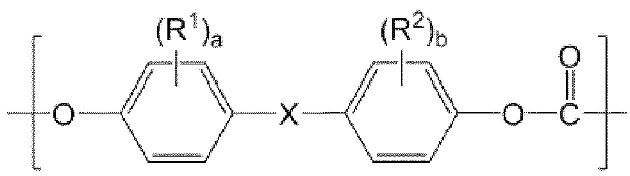
(I)

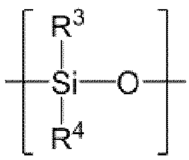
(II)

.

EP 4 174 113 A1

## Description

Technical Field

The invention relates to a resin composition, a molded body, and a method of improving a property of the resin composition.
Specifically, the invention relates to a resin composition able to achieve good compatibility of flowability, impact resistance, and elasticity, a molded body, and a method of improving the properties of the resin composition.

Background Art

Polycarbonate resins have excellent mechanical properties and are widely used industrially, including in the automotive field, OAfield, and the electric and electronic fields. Among them, polycarbonate resins reinforced with carbon fibers are used in OAfields such as housings of notebook computers and housings of single-lens reflex cameras, and in electric and electronic fields.
Patent Documents 1 to 4 disclose polycarbonate resins reinforced with carbon fibers.

Related Art Documents

Patent Documents

[Patent Document 1] JP H 2-64133 A
[Patent Document 2] JP H 6-57640 A
[Patent Document 3] JP 2005-36200 A
[Patent Document 4] JP 2015-81333 A

Summary of the Invention

In recent years, since products such as portable electronic device housings have been made thinner, particularly thin and precision parts are required to have excellent in various mechanical strengths such as rigidity and impact strength.
In order to increase the mechanical strengths of the polycarbonate resin, a method of blending carbon fibers to the polycarbonate resin has been proposed. However, the impact resistance of the carbon fiber reinforced polycarbonate resin was not sufficient since the carbon fibers themselves are very hard and exhibit brittle properties. Further, in recent years, in aircraft applications and automotive applications, there is a high demand for further weight reduction by making rigidity of a carbon fiber composite material to be high, and a further high-filling carbon fiber-reinforced composite material is required. In these cases, further decrease in fluidity and decrease in impact resistance occur.
In the prior arts including Patent Documents 1 to 4, there is room for further improvement from the viewpoint of solving the above-described problems.
One object of the invention is to provide a resin composition able to achieve good compatibility with flowability, impact resistance and elasticity, a molded body, and a method of improving a property of the resin composition.
According to the invention, the following resin compositions and so on can be provided.

1. A resin composition comprising:

a polycarbonatepolyorganosiloxane copolymer (A) comprising a polycarbonate block (A-1) comprising a repeating unit represented by the following general formula (I) and a polyorganosiloxane block (A-2) comprising a repeating unit represented by the following general formula (II); and
carbon fibers (B), the carbon fibers (B) being carbon fibers to which a compound having an epoxy group is attached:

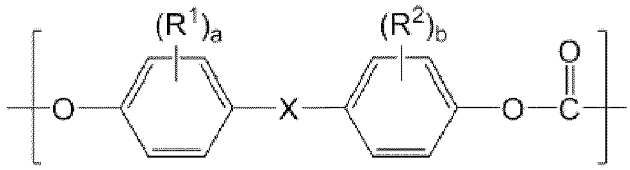
(I)

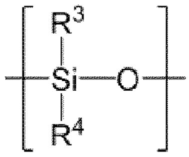 (II)

wherein in the formula (I), $R^1$ and $R^2$ each independently represent a halogen-atom, an alkyl group having 1 to 6 carbon atoms, or an alkoxy group having 1 to 6 carbon atoms;
Each of a and b independently represents an integer of 0 to 4; and
X represents a single bond, an alkylene group having 1 to 8 carbon atoms, an alkylidene group having 2 to 8 carbon atoms, a cycloalkylene group having 5 to 15 carbon atoms, an arylene group having 6 to 12 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O- or -CO-, and
wherein in the formula (II), $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms.

2. The resin composition according to 1, wherein the content of the carbon fibers (B) is 10 to 200 parts by mass with respect to 100 parts by mass of the polycarbonate-polyorganosiloxane copolymer (A).
3. The resin composition according to 1 or 2, further comprising an antioxidant (C).
4. The resin composition according to 3, wherein the antioxidant (C) comprises at least one selected from the group consisting of a phosphorus-based antioxidant and a phenol-based antioxidant.
5. The resin composition according to 3 or 4, wherein the content of the antioxidant (C) is 0.001 parts by mass to 1.0% by mass with respect to 100 parts by mass of the polycarbonate-polyoiganosiloxane copolymer (A).
6. The resin composition according to any one of 1 to 5, wherein the polyorganosiloxane block (A-2) in the polycarbonate-polyorganosiloxane copolymer (A) has an average chain length n of 20 to 500.
7. The resin composition according to any one of 1 to 6, wherein the content of the polyorganosiloxane block (A-2) in the polycarbonate-polyorganosiloxane copolymer (A) is 0.1 to 45% by mass.
8. The resin composition according to any one of 1 to 7, comprising the resin composition is the polycarbonate-polyoiganosiloxane copolymer (A) and the carbon fiber (B) in an amount of 50% by mass or more.
9. A molded body comprising the resin composition according to any one of 1 to 8.
10. A method of improving a property of a resin composition comprising:

a polycarbonatepolyorganosiloxane copolymer (A) comprising a polycarbonate block (A-1) comprising a repeating unit represented by the following general formula (I) and a polyorganosiloxane block (A-2) comprising a repeating unit represented by the following general formula (II); and
carbon fibers (B), wherein
as the carbon fibers (B), carbon fibers to which a compound having an epoxy group is attached is used,

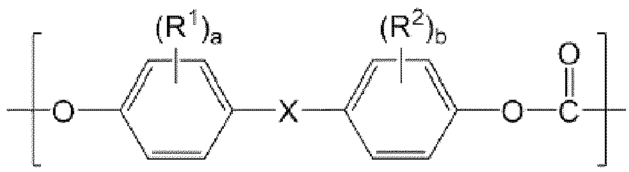 (I)

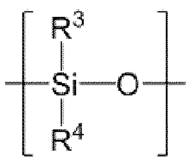 (II)

wherein in the formula (I), $R^1$ and $R^2$ each independently represent a halogen-atom, an alkyl group having 1 to 6 carbon atoms, or an alkoxy group having 1 to 6 carbon atoms;
Each of a and b independently represents an integer of 0 to 4; and
X represents a single bond, an alkylene group having 1 to 8 carbon atoms, an alkylidene group having 2 to 8

carbon atoms, a cycloalkylene group having 5 to 15 carbon atoms, an arylene group having 6 to 12 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O- or -CO-, and wherein in the formula (II), $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms. 11. The method according to 10, wherein the property is one or more selected from the group consisting of flow length, Charpy impact strength, and flexural modulus.

According to the invention, it is possible to provide a resin composition able to achieve both good fluidity, impact resistance, and elasticity, a molded body, and a method of improving a property of the resin composition.

Mode for Carrying out the Invention

Hereinafter, the resin composition, the molded body, and the method of improving a property of the resin composition of the invention will be described in detail.

In this specification, "x to y" represents a numerical range of "x or more and y or less." The upper and lower limits stated for the numerical ranges can be combined arbitrarily.

Also, combinations of two or more of the individual forms of the invention described below are also forms of the invention.

1. Resin composition

The resin composition according to an aspect of the invention is a resin composition comprising a polycarbonate-polyorganosiloxane copolymer (A) comprising a polycarbonate block (A-1) comprising a repeating unit represented by the following general formula (I) and a polyorganosiloxane block (A-2) comprising a repeating unit represented by the following general formula (II); and carbon fibers (B), the carbon fibers (B) being carbon fibers to which a compound having an epoxy group is attached:

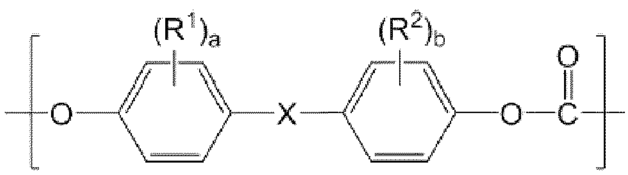 (I)

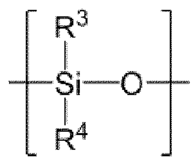 (II)

wherein in the formula (I), $R^1$ and $R^2$ each independently represent a halogen-atom, an alkyl group having 1 to 6 carbon atoms, or an alkoxy group having 1 to 6 carbon atoms;

Each of a and b independently represents an integer of 0 to 4; and

X represents a single bond, an alkylene group having 1 to 8 carbon atoms, an alkylidene group having 2 to 8 carbon atoms, a cycloalkylene group having 5 to 15 carbon atoms, an arylene group having 6 to 12 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O- or -CO-, and

wherein in the formula (II), $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms.

According to the resin composition of this aspect, it is possible to obtain an effect of favorably achieving both fluidity, impact resistance, and elasticity.

Hereinafter, each component included in the resin composition according to this aspect will be described in detail.

(polycarbonate-polyorganosiloxane copolymer (A))

The polycarbonatepolyorganosiloxane copolymer (A) (hereinafter, also referred to as "component (A)" or "PC-POS copolymer") includes a polycarbonate block (A-1) composed of a repeating unit represented by the general formula (I) and a polyorganosiloxane block (A-2) containing a repeating unit represented by the general formula (II).

Examples of the halogen atom each independently represented by $R^1$ and $R^2$ in the general formula (I) include a fluorine atom, a chlorine atom, a bromine atom, and an iodine atom.

Examples of the alkyl group each independently represented by $R^1$ and $R^2$include a methyl group, an ethyl group, a n-propyl group, an isopropyl group, various butyl groups ("various" means including linear and branched groups, and the same applies hereinafter), various pentyl groups, and various hexyl groups are given. As the alkoxy group each independently represented by $R^1$ and $R^2$, those having the alkyl group as an alkyl group moiety.

a and b independently represent an integer of 0 to 4, preferably 0 to 2, and more preferably 0 or 1.

Examples of the alkylene group represented by X include a methylene group, an ethylene group, a trimethylene group, an isopropylidene group, a tetramethylene group, and a hexamethylene group, and an alkylene group having 1 to 5 carbon atoms is preferable.

Examples of the alkylidene group represented by X include an ethylidene group and an isopropylidene group.

Examples of the cycloalkylene group represented by X include a cyclopentanediyl group, a cyclohexanediyl group, and a cyclooctanediyl group, and a cycloalkylene group having 5 to 10 carbon atoms is preferable.

Examples of the arylene group represented by X include a phenylene group and a naphthylene group, and an arylene group having 6 to 10 carbon atoms is preferable.

Examples of the cycloalkylidene group represented by X include a cyclohexylidene group, a 3,5,5-trimethylcyclohexylidene group, and a 2-adamantylidene group, and a cycloalkylidene group having 5 to 10 carbon atoms is preferable, and a cycloalkylidene group having 5 to 8 carbon atoms is more preferable.

The number of carbon atoms of the arylalkylene group having 7 to 15 carbon atoms represented by X means the sum of the number of carbon atoms of the aryl moiety and the number of carbon atoms of the alkylene moiety. Examples of the aryl moiety in the arylalkylene group represented by X include aryl groups with ring carbon atoms of 6-14, such as phenyl, naphthyl, biphenyl, and anthryl groups. Examples of the alkylene moiety include alkylene groups as described above.

The number of carbon atoms of the arylalkylidene group having 7 to 15 carbon atoms represented by X means the sum of the number of carbon atoms of the aryl moiety and the number of carbon atoms of the alkylidene moiety. Examples of the aryl moiety in the arylalkylidene group represented by X include aryl groups having 6 to 14 ring carbon atoms, such as phenyl, naphthyl, biphenyl, and anthryl groups. Examples of the alkylidene moiety include alkylidene groups described above.

Among the above, those in which a and b are each 0 and X is a single bond or an alkylene group having 1 to 8 carbon atoms, or those in which a and b are each 0 and X is an alkylene group having 3 carbon atoms, particularly an isopropylidene group, are preferred.

In the general formula (II), examples of the halogen atom represented independently by $R^3$ and $R^4$ include a fluorine atom, a chlorine atom, a bromine atom, and an iodine atom.

Examples of the alkyl group represented independently by $R^3$ and $R^4$ include a methyl group, an ethyl group, a n-propyl group, an isopropyl group, various butyl groups, various pentyl groups, and various hexyl groups.

Examples of the alkoxy group represented independently by $R^3$ and $R^4$ include those in which the alkyl moiety is the alkyl group described above.

Examples of the aryl group represented independently by $R^3$ or $R^4$ include a phenyl group and a naphthyl group.

Each of $R^3$ and $R^4$ is preferably a hydrogen atom, an alkyl group having 1 to 6 carbon atoms, an alkoxy group having 1 to 6 carbon atoms, or an aryl group having 6 to 12 carbon atoms, and both are more preferably methyl groups.

More specifically, the polyorganosiloxane block (A-2) containing a repeating unit represented by the general formula (II) preferably contains repeating units represented by the general formulae (II-I) to (II-III).

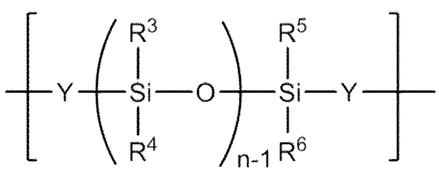

(II-I)

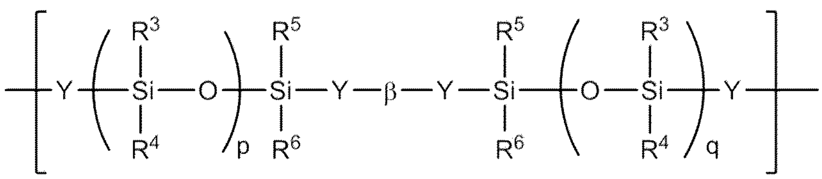

(II-II)

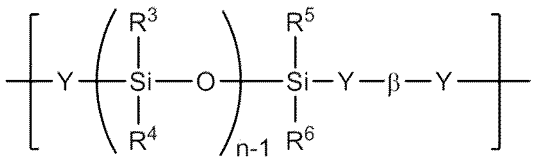

(II-III)

In the formulae (II-I) to (II-III), $R^3$ to $R^6$ independently represents a hydrogen atom, a halogen atom, an alkyl group having 1 to 6 carbon atoms, an alkoxy group having 1 to 6 carbon atoms, or an aryl group having 6 to 12 carbon atoms, and a plurality of each of $R^3$ to $R^6$ may be the same as or different from each other.

Y represents-$R^7O$-, -$R^7COO$-, -$R^7NH$-, -$R^7NR^8$-, -COO-, -S-, -$R^7COO$-$R^9$-O-, or $R^7O$-$R^{10}$-O-, and a plurality of Y may be the same as or different from each other.

$R^7$ represents a single bond, a linear, branched or cyclic alkylene group, an aryl-substituted alkylene group, a substituted or unsubstituted arylene group, or a diarylene group.

$R^8$ represents an alkyl group, an alkenyl group, an aryl group, or an aralkyl group.

$R^9$ represents a diarylene group.

$R^{10}$ represents a linear, branched or cyclic alkylene group or a diarylene group.

β represents a divalent group derived from a diisocyanate compound or a divalent group derived from a halide of a dicarboxylic acid compound.

n represents an average chain length of the polyorganosiloxane, n-1, and p and q each represent the number of the polyorganosiloxane repeating units, and the sum of p and q is n minus 2.)

Examples of the halogen atom represented independently by $R^3$ to $R^6$ include a fluorine atom, a chlorine atom, a bromine atom, and an iodine atom. Examples of the alkyl group represented independently by $R^3$ to $R^6$ include a methyl group, an ethyl group, a n-propyl group, an isopropyl group, various butyl groups, various pentyl groups, and various hexyl groups. Examples of the alkoxy group represented independently by $R^3$ to $R^6$ include those in which the alkyl group moiety is the alkyl group mentioned above.

Examples of the aryl group represented independently by $R^3$ to $R^6$ include a phenyl group and a naphthyl group.

Respective $R^3$ to $R^6$ are preferably a hydrogen atom, an alkyl group having 1 to 6 carbon atoms, an alkoxy group having 1 to 6 carbon atoms, or an aryl group having 6 to 12 carbon atoms.

It is preferable that all of $R^3$ to $R^6$ in the formulae (II-I) to (II-III) are methyl groups.

Examples of the linear or branched alkylene group represented by $R^7$ in the groups of -R’O-, -$R^7COO$-, -$R^7NH$-, - $R^7NR^8$-, -$R^7COO$-$R^9$-O- and -$R^7O$-$R^{10}$-O- represented by Y include an alkylene group having 1 to 8 carbon atoms, and preferably an alkylene group having 1 to 5 carbon atoms. Examples of the cyclic alkylene group represented by $R^7$ include a cycloalkylene group having 5 to 15 carbon atoms, and preferably a cycloalkylene group having 5 to 10 carbon atoms.

When $R^7$ represents an aryl-substituted alkylene group, the alkylene group is bonded to Si. The aryl-substituted alkylene group represented by $R^7$ may have a substituent such as an alkoxy group or an alkyl group on the aromatic ring, and specific structures thereof may include, for example, structures represented by the following formulae (i) and (ii) (in the formulae, another substituted position of the phenylene group is not shown).

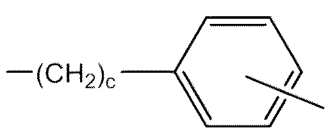

(i)

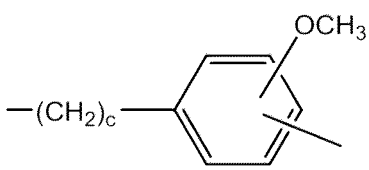

(ii)

In the formulae (i) and (ii), c represents a positive integer, for example, an integer of 1 to 6.

The diarylene group represented independently by $R^7$, $R^9$ and $R^{10}$ means a group in which two arylene groups are linked directly or via a divalent organic group, and specifically, a group represented by $-Ar^1-W-Ar^2-$. Here, $Ar^1$ and $Ar^2$ independently represent an arylene group, and W represents a single bond or a divalent organic group. Examples of the divalent organic group represented by W include an isopropylidene group, a methylene group, a dimethylene group, or a trimethylene group.

Examples of the arylene group represented independently by $R^7$, $Ar^1$ and $Ar^2$ include an arylene group having 6 to 14, carbon atoms, such as a phenylene group, a naphthylene group, a biphenylene group, and an anthrylene group. These arylene groups may have any substituent such as an alkoxy group and an alkyl group.

Examples of the alkyl group represented by $R^8$ include a linear or branched alkyl group having 1 to 8 carbon atoms, preferably 1 to 5 carbon atoms. Examples of the alkenyl group represented by $R^8$ include a linear or branched alkenyl group having 2 to 8, preferably 2 to 5 carbon atoms. Examples of the aryl group represented by $R^8$ include a phenyl group and a naphthyl group. Examples of the aralkyl group represented by $R^8$ include a phenylmethyl group and a phenylethyl group.

The straight-chain, branch chain or cyclic alkylene group represented by $R^{10}$ is the same as that represented by $R^7$.

Y is preferably $-R^7O-$, and $R^7$ is preferably a residue of an aryl-substituted alkylene group, particularly a phenolic compound having an alkyl group, and an organic residue derived from allylphenol or an organic residue derived from eugenol is preferable.

In the formula (II-II), p and q preferably equals to each other.

β represents a divalent group derived from a diisocyanate compound, a divalent group derived from a dicarboxylic acid, or a divalent group derived from a halide of a dicarboxylic acid, and examples thereof include divalent groups represented by the following formulae (iii) to (vii):

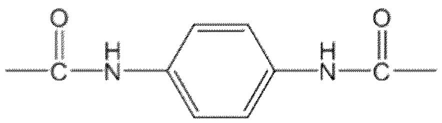
(iii)

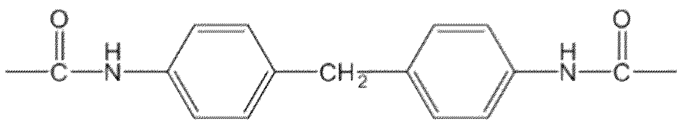
(iv)

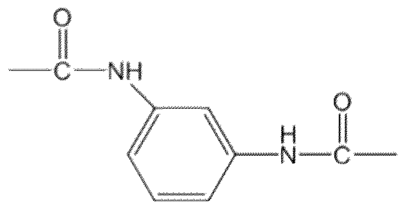
(v)

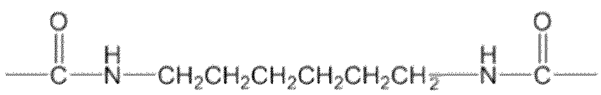
(vi)

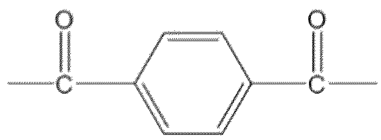
(vii)

The average chain length n of the polyorganosiloxane block (A-2) in the PC-POS copolymer (A) is not particularly limited.

In one embodiment, the average chain length n of the polyorganosiloxane block (A-2) in the PC-POS copolymer (A) may be 20 or more and 500 or less. In this case, n in the formulae (II-I) and (II-III) is 20 or more and 500 or less, and in the case of (II-II), the sum of p and q plus 2 is within the above range.

The average chain length is calculated based on the result of nuclear magnetic resonance (NMR) measurement.

In one embodiment, the average chain length n of the polyorganosiloxane block (A-2) in the PC-POS copolymer (A) may be 30 or more, 35 or more, 40 or more, 45 or more, 50 or more, 55 or more, 60 or more, 65 or more, 70 or more, 75 or more, 80 or more, or 85 or more, and may be 400 or less, 300 or less, 200 or less, 150 or less, 100 or less, 95 or less.

The average chain length n of the polyorganosiloxane block (A-2) in the PC-POS copolymer (A) is preferably 40 or more, or more than 70. By the average chain length n being within the above range, an effect of excellent impact property can be obtained.

In one embodiment, the content of the polyorganosiloxane block (A-2) in the PC-POS copolymer (A) may be 0.1% by mass or more, 0.5% by mass or more, 1.0% by mass or more, 1.5% by mass or more, 2.0% by mass or more, 2.5% by mass or more, 3.0% by mass or more, 3.5% by mass or more, 4.0% by mass or more, 4.5% by mass or more, 5.0% by mass or more, or 5.5% by mass or more, and 45% by mass or less, 40% by mass or less, 35% by mass or less, 30% by mass or less, 25% by mass or less 20% by mass or less, 15% by mass or less, 10% by mass or less, or 8.0% by mass or less. When the polyorganosiloxane content in the PC-POS copolymer (A) is within the above-described range, the effects of the invention can be more favorably exhibited.

The content of the polyorganosiloxane block (A-2) in the PC-POS copolymer (A) is preferably more than 4.0% by mass, more preferably 5.0% by mass or more, and still more preferably 5.5% by mass or more. By the content of the polyorganosiloxane block (A-2) being within the above-mentioned range, an effect of excellent impact property can be obtained.

The content of the polyorganosiloxane block (A-2) is calculated based on the result of nuclear magnetic resonance (NMR) measurement.

The viscosity-average molecular weight (Mv) of the PC-POS copolymer (A) may be appropriately adjusted by using a molecular weight regulator (end terminator) or the like so as to have a desired molecular weight depending on the intended application and product. The viscosity-average molecular weight of the PC-POS copolymer (A) is preferably 9000 or more and 50,000 or less. When the viscosity average molecular weight is 9000 or more, sufficient strength of a resultant molded body can be obtained. When the viscosity average molecular weight is 50,000 or less, injection molding or extrusion molding can be performed at a temperature that does not cause thermal deterioration.

The viscosity-average molecular weight of the PC-POS copolymer (A) is more preferably 12,000 or more, still more preferably 14,000 or more, and particularly preferably 16,000 or more, and more preferably 30,000 or less, still more preferably 25,000 or less, still more preferably 23,000 or less, and particularly preferably 20,000 or less.

The viscosity-average molecular weight (Mv) is calculated from Schnell equation below based on the measurement result of the intrinsic viscosity [η] of methylene chloride at 20°C.

$$[\eta]=1.23\times10^{-5}\times Mv^{0.83}$$

The PC-POS copolymer (A) can be produced by a known production method such as an interfacial polymerization method (phosgene method), a pyridine method, and a transesterification method. In particular, when the interfacial polymerization method is employed, the separation step of the organic phase containing the PC-POS copolymer and the aqueous phase containing the unreacted material, the catalyst residue, and so on is easy, and the separation of the organic phase containing the PC-POS copolymer and the aqueous phase in the cleaning steps such as alkaline cleaning, acid cleaning, and pure water cleaning is easy. Therefore, the PC-POS copolymer can be efficiently obtained. As a method of producing the PC-POS copolymer, for example, the method described in JP-A-2014-80462 or the like can be referred to.

Specifically, the PC-POS copolymer can be produced by an interfacial polycondensation reaction with dissolving a polycarbonate oligomer prepared in advance and a polyorganosiloxane to be described later in a water-insoluble organic solvent (methylene chloride or the like), adding an alkaline compound aqueous solution (sodium hydroxide aqueous solution or the like) of a dihydric phenol compound (bisphenol A or the like), and using a tertiary amine (triethylamine or the like) or a quaternary ammonium salt (trimethylbenzylammonium chloride or the like) as a polymerization catalyst, in the presence of a terminal terminator (monovalent phenol such as p-tert-butylphenol). The PC-POS copolymer (A) can also be produced by copolymerizing a polyorganosiloxane and a dihydric phenol with phosgene, a carbonate ester or a chloroformate ester.

As the polyorganosiloxane as a raw material, one or more kinds selected from the group consisting of polyorganosiloxanes represented by the following general formulae (1), (2) and (3) can be used:

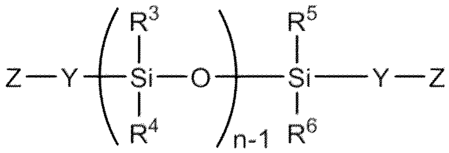

(1)

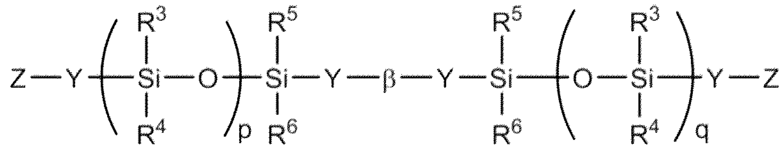

(2)

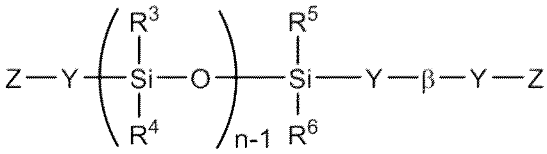

(3)

In the formulae (1) to (3), $R^3$ to $R^6$, Y, β, n-1, p and q are as described above, and the specific examples and preferable examples are also the same as described above.

Z represents a hydrogen atom or a halogen atom, and a plurality of Z may be the same as or different from each other.

Examples of the polyorganosiloxane represented by the general formula (1) include compounds represented by the following general formulae (1-1) to (1-11):

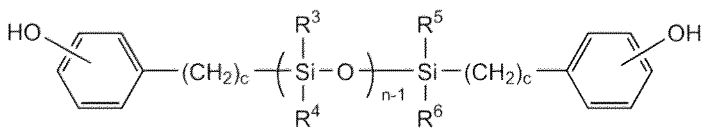

(1-1)

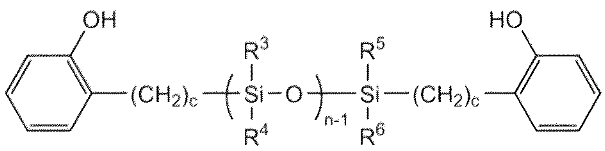

(1-2)

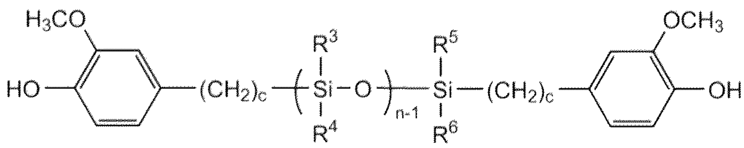

(1-3)

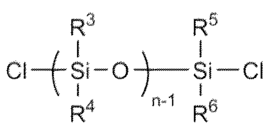

(1-4)

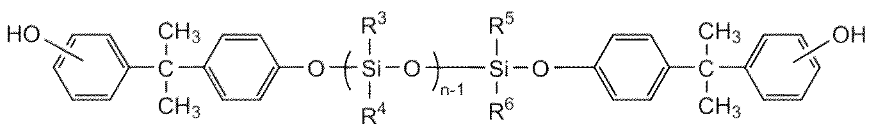

(1-5)

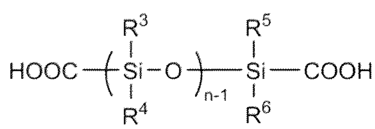

(1-6)

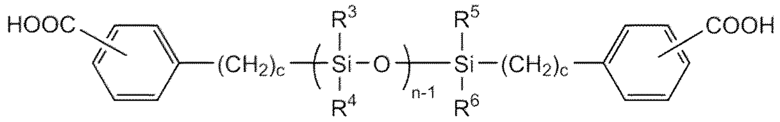
(1-7)

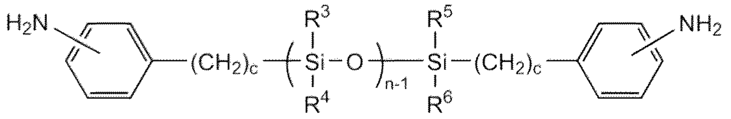
(1-8)

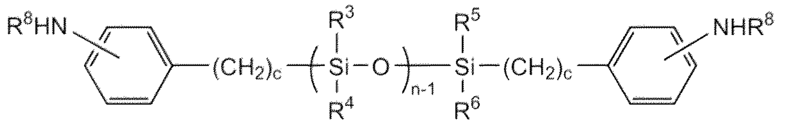
(1-9)

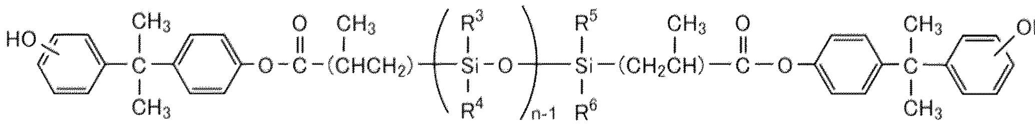
(1-10)

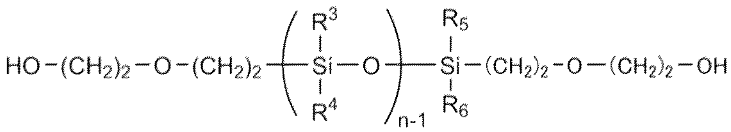
(1-11)

In the formulae (1-1) to (1-11), $R^3$ to $R^6$, n-1 and $R^8$ are as defined above, and preferred ones are also the same as mentioned above. c represents a positive integer, and is usually an integer of 1 to 6. Among these, from the viewpoint of ease of polymerization, a phenol-modified polyorganosiloxane represented by the general formula (1-1) is preferable. From the viewpoint of availability, α,ω-bis[3-(o-hydroxyphenyl)propyl]polydimethylsiloxane, which is one of the compounds represented by the general formula (1-2), and α,ω-bis[3-(4-hydroxy-3-methoxyphenyl)propyl]polydimethylsiloxane, which is one of the compounds represented by the general formula (1-3), are preferred.

In addition, as the polyorganosiloxane raw material, a compound represented by the following general formula (4) may be used:

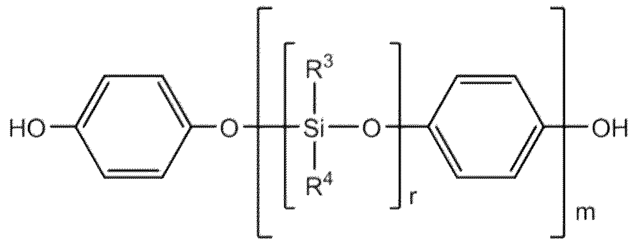
(4)

In the formula (4), $R^3$ and $R^4$ are the same as those described above. The average chain length of the polyorganosiloxane block represented by the general formula (4) is (product of r and m), and the range of (product of r and m) is the same as the above-mentioned n.

When the compound of the formula (4) is used as a polyorganosiloxane raw material, the polyorganosiloxane block (A-2) preferably has a unit represented by the following general formula (II-IV):

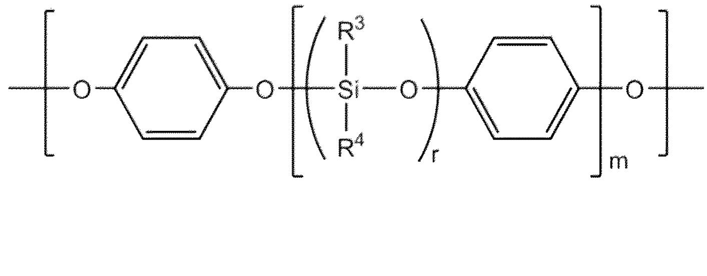
(II-IV)

In the formula, $R^3$, $R^4$, r and m are as described above.

The polyorganosiloxane block (A-2) may have a structure represented by the following general formula (II-V):

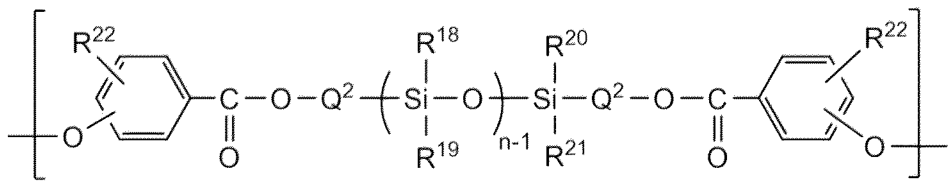

(II-V)

In the formula, $R^{18}$ to $R^{21}$ are independently a hydrogen atom or an alkyl group having 1 to 13 carbon atoms. $R^{22}$ is an alkyl group having 1 to 6 carbon atoms, a hydrogen atom, a halogen atom, a hydroxy group, an alkoxy group having 1 to 6 carbon atoms, or an aryl group having 6 to 14 carbon atoms. $Q^2$ is a divalent aliphatic group having 1 to 10 carbon atoms, n represents the average chain length as described above.

In the general formula (II-V), examples of the alkyl group having 1 to 13 carbon atoms each independently represented by $R^{18}$ to $R^{21}$ include a methyl group, an ethyl group, a n-propyl group, an isopropyl group, various butyl groups, various pentyl groups, various hexyl groups, various heptyl groups, various octyl groups, 2-ethylhexyl groups, various nonyl groups, various decyl groups, various undecyl groups, various dodecyl groups, and various tridecyl groups. Among them, $R^{18}$ to $R^{21}$ preferably represent a hydrogen atom or an alkyl group having 1 to 6 carbon atoms, and more preferably all of $R^{18}$ to $R^{21}$ represent a methyl group.

Examples of the alkyl group having 1 to 6 carbon atoms represented by $R^{22}$ include a methyl group, an ethyl group, a n-propyl group, an isopropyl group, various butyl groups, various pentyl groups, and various hexyl groups. The halogen atoms represented by $R^{22}$ include a fluorine atom, a chlorine atom, a bromine atom, and an iodine atom. Examples of the alkoxy group having 1 to 6 carbon atoms represented by $R^{22}$ include those in which the alkyl group moiety is the alkyl group mentioned above. Examples of the aryl group having 6 to 14 carbon atoms represented by $R^{22}$ include a phenyl group, a tolyl group, a dimethylphenyl group, and a naphthyl group. Among them, $R^{22}$ preferably represents a hydrogen atom or an alkoxy group having 1 to 6 carbon atoms, more preferably a hydrogen atom or an alkoxy group having 1 to 3 carbon atoms, and still more preferably a hydrogen atom.

The divalent aliphatic group having 1 to 10 carbon atoms represented by $Q^2$ is preferably a linear or branched divalent saturated aliphatic group having 1 to 10 carbon atoms. The number of carbon atoms of the saturated aliphatic group is preferably 1 or more and 8 or less, more preferably 2 or more and 6 or less, still more preferably 3 or more and 6 or less, still more preferably 4 or more and 6 or less. The average chain length n is as described above.

Preferred examples of the structural units (II-V) include those represented by the following formula (II-VI):

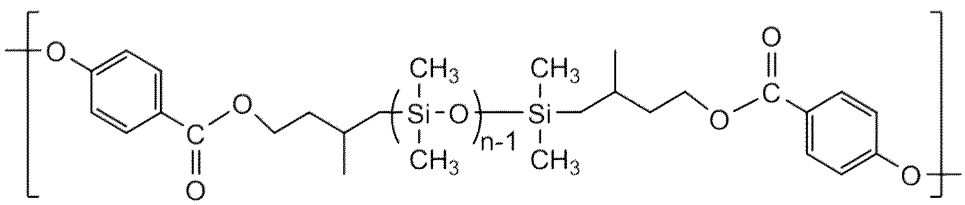

(II-VI)

In the formula (II-VI), n-1 is as described above.)

The polyorganosiloxane block (A-2) represented by the general formula (II-V) or (II-VI) can be obtained by using a polyorganosiloxane raw material represented by the following general formula (5) or (6):

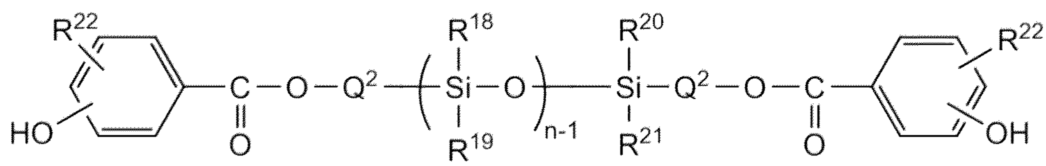

(5)

In the formula (5), $R^{18}$ to $R^{22}$, $Q^2$, and n-1 are as described above.

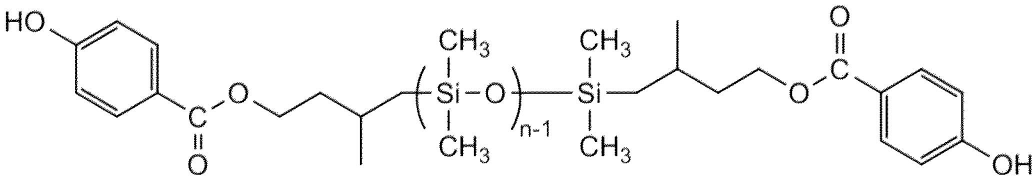

(6)

In the formula (6), n-1 is as described above.

The method of producing the polyorganosiloxane is not particularly limited. For example, according to the method described in JP-A-1 1-217390, a cyclotrisiloxane and a disiloxane are reacted in the presence of an acidic catalyst to synthesize an α,ω-dihydrogen organopentasiloxane, and then an addition reaction of a phenolic compound (for example, 2-allylphenol, 4-allylphenol, eugenol, 2-propenylphenol, and the like) to the α,ω-dihydrogen organopentasiloxane in the presence of a catalyst for hydrosilylation reaction is carried out to obtain a crude polyorganosiloxane. In addition, according to the method described in WO 91/00885, a crude polyorganosiloxane can be obtained by reacting octamethylcyclotetrasiloxane and tetramethyldisiloxane in the presence of sulfuric acid (acidic catalyst) and subjecting the obtained α,ω-dihydrogen organopolysiloxane to an addition reaction with a phenolic compound or the like in the presence of a catalyst for hydrosilylation reaction in the same manner as described above. Incidentally, α, ω-dihydrogenorganopolysiloxane may be used through appropriately adjusting its chain length n depending upon the polymerization conditions, or a commercially available α, ω-dihydrogenorganopolysiloxane may be used. Specifically, those described in JP-A-2016-098292 can be used.

A polycarbonate oligomer can be prepared by reaction of a dihydric phenol with a carbonate precursor such as phosgene or triphosgene in an organic solvent such as methylene chloride, chlorobenzene, chloroform or the like. When using the transesterification process, a polycarbonate oligomer can also be prepared by reaction of a dihydric phenol with a carbonate precursor such as diphenyl carbonate.

As the dihydric phenol, a dihydric phenol represented by the following general formula (viii) is preferably used:

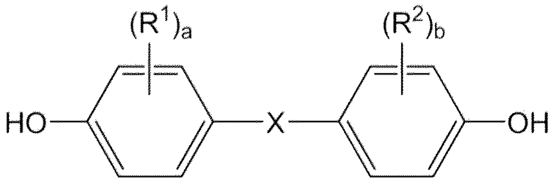

(viii)

In the formula (viii), $R^1$, $R^2$, a, b and X are as described above.

Examples of the dihydric phenol represented by the general formula (viii) include bis(hydroxyphenyl)alkanes such as 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl) propane; 4,4'-dihydroxydiphenyl, bis(4-hydroxyphenyl)cycloalkanes, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and the like. These dihydric phenols may be used singly or as a mixture of two or more thereof. Of these, bis(hydroxyphenyl)alkane-based dihydric phenols are preferred, and bisphenol A is more preferred. When bisphenol A is used as the dihydric phenol, the PC-POS copolymer represented by the general formula (i) becomes a PC-POS copolymer wherein X is an isopropylidene group and a=b=0.

Examples of the dihydric phenol other than bisphenol A include bis(hydroxyaryl)alkanes, bis(hydroxyaryl)cycloalkanes, dihydroxyaryl ethers, dihydroxydiaryl sulfides, dihydroxydiaryl sulfoxides, dihydroxydiaryl sulfones, dihydroxydiphenyls, dihydroxydiaryl fluorenes, dihydroxydiaryl adamantanes, and the like. These dihydric phenols may be used singly or as a mixture of two or more thereof.

Examples of bis(hydroxyaryl)alkanes include bis(4-hydroxyphenyl)methane, 1, 1 -bis(4-hydroxyphenyl)ethane, 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydruxy-3 -methylphenyl)propane, bis(4-hydroxyphenyl)naphthylmethane, 1,1-bis(4-hydroxy-3-tert-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane, and 2,2-bis(4-hydroxy-3,5-dibromophenyl)propane.

Examples of the bis(hydroxyaryl)cycloalkanes include 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbomane, and 1,1-bis(4-hydroxyphenyl)cyclododecane. Examples of the dihydroxyaryl ethers include 4,4'-dihydroxydiphenyl ether and 4,4'-dihydroxy-3,3'-dimethylphenyl ether.

Examples of the dihydroxydiaryl sulfides include 4,4'-dihydroxydiphenyl sulfide and 4,4'-dihydroxy-3,3'-dimethyldiphenyl sulfide. Examples of the dihydroxydiaryl sulfoxides include 4,4'-dihydroxydiphenyl sulfoxide and 4,4'-dihydroxy-3,3'-dimethyldiphenyl sulfoxide. Examples of the dihydroxydiaryl sulfones include 4,4'-dihydroxydiphenyl sulfone, and 4,4'-dihydroxy-3,3'-dimethyldiphenyl sulfone.

Examples of the dihydroxydiphenyls include 4,4'-dihydroxydiphenyl. Examples of the dihydroxydiaryl fluorenes include 9,9 -bis(4-hydroxyphenyl)fluorene and 9,9-bis(4-hydroxy-3-methylphenyl)fluorene. Examples of the dihydroxydiaryladamantanes include 1,3-bis(4-hydroxyphenyl)adamantane, 2,2-bis(4-hydroxyphenyl)adamantane, and 1,3-bis(4-hydroxyphenyl)-5,7-dimethyladamantane.

Examples of dihydric phenol other than those mentioned above include 4,4'-[1,3-phenylenebis(1-methylethylidene)]bisphenol, 10,10-bis(4-hydroxyphenyl)-9-anthrone, and 1,5-bis(4-hydroxyphenylthio)-2,3-dioxapentane.

A terminal terminator (molecular weight regulator) can be used to adjust the molecular weight of the resulting PC-POS copolymer. Examples of the terminal terminator include monohydric phenols such as phenol, p-cresol, p-tert-butylphenol, p-tert-octylphenol, p-cumylphenol, p-nonylphenol, m-pentadecylphenol and p-tert-amylphenol. These monohydric phenols may be used singly or in combination of two or more.

After the interfacial polycondensation, the mixture is appropriately allowed to stand to separate into an aqueous phase and an organic solvent phase [separation step], the organic solvent phase is washed preferably, with a basic aqueous solution, an acidic aqueous solution, and water are in this order) [washing step], and the resultant organic phase is concentrated [concentration step], and dried [drying step], whereby PC-POS copolymer (A) can be obtained.

(Carbon fiber (B))

The carbon fiber (B) (hereinafter, also referred to as "component (B)") is a carbon fiber attached with a compound having an epoxy group.

The type of the carbon fiber (B) is not particularly limited, and any of, for example, a PAN type using polyacrylonitrile as a raw material, a pitch type using coal tar pitch in petroleum or coal as a raw material, a thermosetting resin, a variety of carbon fibers such as phenol type using phenolic resin as a raw material, and a rayon type can be used. The carbon fiber (B) may be one obtained by a vapor deposition method or may be recycled carbon fibers (RCF). As described above, the carbon fiber (B) is not particularly limited, but preferably contains at least one selected from the group consisting of PAN carbon fibers, pitch-based carbon fibers, thermosetting carbon fibers, phenolic carbon fibers, vapor-grown carbon fibers, and recycled carbon fibers (RCF).

The tensile strength of the carbon fiber (B) is not particularly limited, and may be, for example, 1000 MPa or higher or 3000 MPa or higher.

The tensile modulus of the carbon fiber (B) is not particularly limited, and may be, for example, 50 GPa or higher or 200 GPa or higher.

The shape of the carbon fiber (B) is preferably chopped fibers. Both the single fiber and the fiber bundle may be mixed in the carbon fiber (B). When chopped fibers are used, the average fiber length thereof may be 0.1 mm or longer and 50 mm or shorter. The number of single fibers constituting a fiber bundle may be substantially uniform or different in each fiber bundle.

The fiber diameter of the carbon fiber is not particularly limited, for example, may be 3 μm or larger or 4 μm or larger, and 20 μm or smaller, 15 μm or smaller, may be 10 μm or smaller or 8 μm or smaller. The average fiber length and fiber diameter of the carbon fiber can be measured using an electron microscope.

The compound having an epoxy group may be one attached to the carbon fiber as a sizing agent. The compound having an epoxy group may coat a part or all of the surface of the carbon fiber. The compound having an epoxy group added to the carbon fibers as the sizing agent does not necessarily have to be entirely attached to the carbon fibers, and a part of the compound having an epoxy group may be detached from the carbon fibers and dispersed in the resin composition.

Examples of commercially available products of the carbon fiber (B) coated with a compound having an epoxy group include Tenax (registered trademark) chopped fiber HTC261 manufactured by Teijin Co., Ltd., and Pyrophil (registered trademark) chopped fiber TR066A manufactured by Mitsubishi Chemical Co., Ltd. (those treated with an epoxy-based sizing agent). Alternatively, a Pyrophil (registered trademark) chopped fiber TR06Q (treated with a special epoxy-based sizing agent) manufactured by Mitsubishi Chemical Corporation may be used.

In one embodiment, the content of the component (B) in the resin composition may be, for example, 5 parts by mass or more, 10 parts by mass or more, 15 parts by mass or more, 20 parts by mass or more, 22 parts by mass or more, or 25 parts by mass or more, and may be 500 parts by mass or less, 300 parts by mass or less, 200 parts by mass or less, 100 parts by mass or less, 90 parts by mass or less, 80 parts by mass or less, 70 parts by mass or less, or 67 parts by mass or less, with respect to 100 parts by mass of the component (A).

In one embodiment, the blending ratio ((A): (B)) based on the mass of the PC-POS copolymer (A) and the carbon fiber (B) may be 95 to 35:5 to 65, 90 to 40:10 to 60, 85 to 40:15 to 60, 85 to 55:15 to 45, or 80 to 60:20 to 40.

(Antioxidant (C))

The resin composition according to this aspect further includes or does not include an antioxidant (C) (hereinafter, also referred to as "component (C)").

When the resin composition according to this aspect includes the antioxidant (C), oxidative deterioration during melting of the resin composition can be suppressed, and coloring or the like due to oxidative deterioration can be suppressed.

As the antioxidant (C), for example, one or more selected from the group consisting of a phosphorus-based antioxidant and a phenol-based antioxidant may be used.

Examples of the phenolic antioxidant include hindered phenols such as n-octadecyl-3-(3,5-di-tert-butyl-4-hydroxyphenyl)propionate, 2,6-di-tert-butyl-4-methylphenol, 2,2'-methylenebis(4-methyl-6-tert-butylphenol), and pentaerythritol-tetrakis[3-(3,5-di-tert-butyl-4-hydroxyphenyl)propionate]. Among these antioxidants, those having a pentaerythritol diphosphite structure such as bis(2,6-di-tert-butyl 4-methylphenyl)pentaerythritol diphosphite and bis(2,4-di-tert-butylphenyl)pentaerythritol diphosphite, and triphenylphosphine are preferable.

Commercially available phenolic antioxidants include, for example, Irganox1010 (manufactured by BASF Japan, "Irganox" registered trademark), Irganox1076 (manufactured by BASF Japan), Irganox1330 (manufactured by BASF Japan), Irganox3114 (manufactured by BASF Japan), Irganox3125 (manufactured by BASF Japan), BHT (manufactured by Takeda Chemical Industries, "BHT" registered trademark), Cyanox1790 (manufactured by Cytec Industries, "Cyanox" registered trademark), and Sumilizer GA-80 (manufactured by Sumitomo Chemical, "Sumilizer" registered trademark).

Examples of the phosphorus antioxidants include triphenylphosphite, diphenylnonylphosphite, diphenyl(2-ethylhexyl)phosphite, tris(2,4-di-tert-butylphenyl)phosphite, tris(nonylphenyl)phosphite, diphenylisooctylphosphite, 2,2'-methylenebis(4,6-di-tert-butylphenyl)octylphosphite, diphenylisodecylphosphite, diphenylmono(tridecyl)phosphite, phenyldiisodecylphosphite, phenyldi(tridecyl)phosphite, tris(2-ethylhexyl)phosphite, tris(isodecyl)phosphite, tris(tridecyl)phosphite, dibutylhydrogenphosphite, trilaurylthiophosphite, tetrakis(2,4-di-tert-butylphenyl)-4,4'-biphenylenediphosphonite, 4,4'-isopropylidenediphenol dodecylphosphite, 4,4'-isopropylidenediphenol tridecylphosphite, 4,4'-isopropylidenediphenol tetradecylphosphite, 4,4'-isopropylidenediphenol pentadecylphosphite, 4,4'-butylidenebis(3-methyl-6-tert-butylphenyl)ditridecylphosphite, bis(2,4-di-tert-butylphenyl)pentaerythritol diphosphite, bis(2,6-di-tert-butylphenyl4-methylphenyl)pentaerythritol diphosphite, bis(nonylphenyl)pentaerythritol diphosphite, distearyl-pentaerythritol diphosphite, phenylbisphenol A pentaerythritol diphosphite, tetraphenyldipropyleneglycol diphosphite, 1,1,3-tris(2-methyl-4-ditridecylphosphite-5-tert-butylphenyl)butane, 3,4,5,6-dibenzo-1,2-oxaphosphane, triphenylphosphine, diphenylbutylphospine, diphenyloctadecylphosphine, tris(p-tolyl)phosphine, tris(p-nonylphenyl)phosphine, tris(naphthyl)phospine, diphenyl(hydroxymethyl)phosphine, diphenyl(acetoxymethyl)phosphine, diphenyl(β-ethylcarboxyethyl)phosphine, tris(p-chlorophenyl)phosphine, tris(p-fluorophenyl)phosphine, benzyldiphenylphosphine, diphenyl(β-cyanoethyl)phosphine, diphenyl(p-hydroxyphenyl)phosphine, diphenyl(1,4-dihydroxyphenyl)-2-phosphine, and phenylnaphthylbenzylphosphine.

Examples of commercially available phosphorus-based antioxidants include Irgafos 168 (manufactured by BASF Japan Co., Ltd., "Irgafos" is a registered trademark), Irgafos 12 (manufactured by BASF Japan Co., Ltd.), Irgafos 38 (manufactured by BASF Japan Co., Ltd.), Adecastab 2112 (manufactured by ADEKA Co., Ltd., "Adecastab" is a registered trademark), Adecastab C (manufactured by ADEKA Co., Ltd.), Adecastab 329K (manufactured by ADEKA Co., Ltd.), Adecastab PEP36 (manufactured by ADEKA Co., Ltd.), JC263 (manufactured by Johoku Chemical Industry Co., Ltd., "JC263" is a registered trademark), Sandstab P-EPQ (manufactured by Clariant Co., Ltd., "Sandstab" is a registered trademark), Weston 618 (manufactured by GE Co., Ltd., "Weston" is a registered trademark), Weston619G (manufactured by GE Co., Ltd.), Weston 624 (manufactured by GE Co., Ltd.), and Doverphos A-9228PC (manufactured by Dover Chemical Corporation, "Doverphos" is a registered trademark).

In one embodiment, the content of the component (C), with respect to 100 parts by mass of the component (A), is 0.001 parts by mass or more, 0.01 parts by mass or more or 0.05 parts by mass or more, also 1.0 parts by mass or less, 0.5 parts by mass or less, 0.4 parts by mass or less or 0.3 parts by mass or less. The larger the blending amount exceeds 0.001 parts by mass or more, the more sufficient antioxidant effect can be obtained. Further, the smaller the blending amount is below 1.0% by mass or less, the higher the effect of suppressing the mold contamination during molding becomes.

(Other components)

The resin composition according to this aspect may contain other components other than the above-described components (A) to (C) as long as the effects of the invention are not impaired.

Examples of the other components include a rubber-like elastic body, a mold release agent, a hydrolysis-resistant agent, an ultraviolet absorber, a flame retardant, a flame retardant auxiliary" a reinforcing material, a filler, and a dye.

In addition, the resin composition according to this aspect may include an aromatic polycarbonate different from the component (A). The aromatic polycarbonates are produced, for example, by a reaction of a dihydric phenol with a carbonate precursor such as phosgene in a solvent such as methylene chloride in the presence of a known acid acceptor or viscosity average molecular weight regulator, or by a transesterification reaction of a dihydric phenol with a carbonate precursor such as diphenyl carbonate. As the dihydric phenol, 2,2-bis(4-hydroxyphenyl)propane [commonly called bisphenol A] is used, and it is preferable that the aromatic polycarbonate includes a non-copolymerized homopolycarbonate obtained by using p-tert-butylphenol as a viscosity-average molecular weight regulator, since decrease in strength of the molded body due to the occurrence of weld lines during injection molding is difficult to cause.

The resin composition according to this aspect includes or does not include a rubber-like elastic body as the other components.

Examples of the rubber-like elastic body include a styrene-based thermoplastic elastomer.

Examples of the styrene-based thermoplastic elastomer include a styrene-ethylene·butylene-styrene copolymer, a styrene-ethylene·propylene-styrene copolymer, a styrene-ethylene·ethylene·propylene-styrene copolymer, a styrene-butadiene-styrene triblock copolymer, a styrene-isoprene-styrene triblock copolymer, a styrene-hydrogenated butadiene diblock copolymer, a styrene-hydrogenated isoprene diblock copolymer, a styrene-butadiene diblock copolymer, and a styrene-isoprene diblock copolymer.

The resin composition according to this aspect exhibits an effect of suppressing a decrease in rigidity and heat resistance due to a low content of the rubber-like elastic body and a substantial absence of the rubber-like elastic body. Such an effect is more pronounced by the low content of, particularly a styrene-ethylene·butylene-styrene block copolymer, as the rubber-like elastic body, and further by the substantial absence of the styrene-ethylene·butylene-styrene block copolymer.

In one embodiment, the content of the rubber-like elastic body in the resin composition, relative to the sum of the components (A) and (B) being 100 parts by mass, is less than 1.0 mass, 0.9 parts by mass or less, 0.8 parts by mass or less, 0.7 parts by mass or less, 0.6 parts by mass or less, 0.5 parts by mass or less, less than 0.5 parts by mass, or the resin composition is substantially the rubber-like elastic body free. It should be noted that when "substantially free" is used, it may be included as inevitable impurities.

In one embodiment, 50% by mass or more, 60% by mass or more, 70% by mass or more, 80% by mass or more, 90% by mass or more, 95% by mass or more, 98% by mass or more, 99% by mass or more, 99.5% by mass or more, or substantially 100% by mass of the resin composition is composed of

the components (A) and (B) or
the components (A), (B) and (C).
When it is "substantially 100% by mass", unavoidable impurities may be contained.

The resin composition according to one aspect of the invention can be obtained by blending and kneading the above-described components. The blending and kneading can be carried out by premixing with a commonly used apparatus such as a ribbon blender, a drum tumbler, or the like, followed by a method using a Henschel mixer, a Banbury mixer, a single-screw extruder, a twin-screw extruder, a multi-screw extruder, a cokneader, or the like,. The heating temperature at the time of kneading is usually appropriately selected within a range of 240°C or higher and 320°C or lower. For the melt-kneading, an extruder, in particular a vented extruder, is preferably used. The resin composition may be in the form of pellets, for example.

2. Molded body

The molded body according to one aspect of the invention includes the resin composition according to one aspect of the invention.

Various molded bodies can be produced using the resin composition (e.g., in the form of pellets) according to one aspect of the invention as raw materials by injection molding, injection compression molding, extrusion molding, blow molding, press molding, vacuum molding, and foaming methods, etc. In particular, the pellets obtained by melt-kneading can be suitably used for the production of an injection molded body by injection molding or injection compression molding.

Such a molded body can be suitably used, for example, as an exterior or interior component of an electrical/electronic device component such as a television, a radio, a camera, a video camera, an audio player, an DVD player, an air conditioner, a cellular phone, a smart phone, a transceiver, a display, a computer, a tablet terminal, a portable game device, a stationary game device, a stationary electronic device, a register, a calculator, a copier, a printer, a facsimile, a communication base station, a battery, a robot, and the like, and an exterior or interior component of an automobile, a railroad, a ship, an aircraft, an aerospace industrial device, a medical device, and a component of a building material.

3. Method of improving property of resin composition

The method of improving a property of the resin composition according to an aspect of the invention is a method of improving the properties of a resin composition comprising a polycarbonate-polyorganosiloxane copolymer (A) comprising a polycarbonate block (A-1) comprising a repeating unit represented by the following general formula (I) and a polyorganosiloxane block (A-2) comprising a repeating unit represented by the following general formula (II), as explained above; and carbon fibers (B), wherein as the carbon fibers (B), carbon fibers to which a compound having an epoxy group is attached is used.

As to the resin composition in this aspect, the description of the resin composition according to one aspect of the invention is made a reference.

The properties of the resin composition improved by this aspect may be, for example, one or more selected from the group consisting of flow length, Charpy impact strength, and flexural modulus. Preferably, the flow length, Charpy impact strength and flexural modulus are all improved.

Since these properties can vary in the required range depending on the application, there is a need for a method of improving the properties depending on the application. By the method of improving the property of the resin composition according to one aspect of the invention, it is possible to adjust the balance of the properties required for various applications. Specifically, the mixing ratio of the resin that is the PC-POS copolymer resin and the carbon fiber allows to improve the flow length (fluidity), the Charpy impact strength, and the flexural modulus while keeping these properties well balanced. The blending ratio ((A):(B)) based on the mass of PC-POS copolymer (A) and the carbon fiber (B) in the resin composition may be 95 to 35:5 to 65, 90 to 40:10 to 60, 85 to 40:15 to 60, 85 to 55:15 to 45, or 80 to 60:20 to 40. By adjusting the blending ratio in this range, the properties can be further improved depending upon the application while keeping the flow length (fluidity), the Charpy impact strength, and the flexural modulus well balanced.

In this aspect, "the flow length being improved" means that the flow length measured by the method described in the Examples is increased. "Charpy impact strength being improved" means that Charpy impact strength measured by the method described in the Examples is increased. "Flexural modulus being improved" means that flexural modulus measured by the method described in the Examples is increased.

Examples

Examples of the invention will be described below, but the invention is not limited thereto. In the following explanation, the polydimethylsiloxane may be referred to as "PDMS".

1. Measurement method

The characteristic values in each example were measured in accordance with the following procedure.

(1) Average chain length n and content of polyorganosiloxane block (A-2)

The average chain length n and the content of the polyorganosiloxane block (A-2) were calculated from a ratio of the integral values of the methyl groups of the polydimethylsiloxane measured by NMR Details will explained below.

<Determination method of average chain length n of Polyorganosiloxane block (A-2)>

$^1$H-NMR parameter
NMR device: ECA-500 manufactured by JEOL RESONANCE Co., Ltd.
Probes: 50TH5AT/FG2
Observation range: -5 to 15 ppm
Observation center: 5 ppm
Pulse repetition time: 9 seconds
Pulse width: 45°
NMR tube:5cp
Sample volume: 30 to 40 mg
Solvent: deuterochloroform
Measurement temperature: room temperature
Number of integrations: 256 times
In the case of allylphenol-terminated polydimethylsiloxanes

A: integral value of the methyl group of the dimethylsiloxane moiety observed around δ-0.02 to 0.5
B: integral value of the methylene group of allylphenol observed around δ2.50 to2.75
Average chain length n of polydimethylsiloxane = (A/6)/(B/4)
In the case of eugenolterminated polydimethylsiloxanes
A: integral value of the methyl group of the dimethylsiloxane moiety observed around δ-0.02 to 0.5
B: integral value of the methylene group of eugenol observed around δ2.40 to 2.70
Average chain length n of polydimethylsiloxane = (A/6)/(B/4)

Determination method of content of Polyorganosiloxane Block (A-2)

Determination of the copolymerization amount of polydimethylsiloxane in p-tert-butylphenol (PTBP)-terminated polycarbonate to which allylphenol-terminated polydimethylsiloxane was copolymerized

NMR device: ECA-500 manufactured by JEOL RESONANCE Co., Ltd.
Probes: 50TH5AT/FG2
Observation range: -5 to 15 ppm
Observation center: 5 ppm
Pulse repetition time: 9 seconds
Pulse width: 45°
Number of integrations: 256 times
NMR tube: 5φ
Sample volume: 30 to 40 mg
Solvent: deuterochloroform
Measurement temperature: room temperature
A: integral value of the methyl group of BPA moiety observed around δ1.5 to 1.9
B: integral value of the methyl group of the dimethylsiloxane moiety observed around δ-0.02 to 0.3
C: integral value of the butyl group of p-tert-butylphenyl moiety observed around δ12 to 1.4
a=A/6
b=B/6
c=C/9
T=a+b+c
f=a/T×100
g=b/T×100
h=c/T×100
TW=f×254+g×74.1+h×149
PDMS (% by mass)=g×74.1/TW×100

(2) Viscosity average molecular weight

The viscosity-average molecular weight (Mv) was calculated by measuring the viscosity of methylene chloride solution at 20°C using an Ubbelohde-type viscometer, and determining the intrinsic viscosity [η] from the measured viscosity.
$[\eta]=1.23\times10^{-5}\times Mv^{0.83}$

(3) Flow length (Flow property)

The pellets obtained in the respective examples were used to produce a spiral-shaped molded article having a thickness 2 mm and a width 10 mm using an injection molding machine at a cylinder temperature of 320°C, a mold temperature of 95°C, and an injection pressure of 80 Mpa, and the flow length (spiral flow length) thereof was measured. The larger the value, the better the fluidity.

(4) Charpy impact strength

Using the pellets obtained in the respective examples, notched and non-notched test pieces having a thickness of 4 mm were prepared, and the Charpy impact strength was measured for each test piece in accordance with ISO 179-1:2010. The larger the value, the better the impact strength.

(5) Flexural modulus

A test piece having a thickness of 4 mm was prepared using the pellets obtained in the respective examples, and a bending test was performed in accordance with ISO 178:2001, and the flexural modulus was measured. The larger the value, the better the bending property.

2. Components

The components used in each example are as follows.

(1) Resin

A1: polycarbonate-polyorganosiloxane copolymer prepared in Production Examples 1 and 2 described later
A'1: homopolycarbonate ("Taflon FN1700" manufactured by Idemitsu Kosan Co., Ltd., homopolycarbonate produced from bisphenol A, viscosity-average molecular weight = 17,700)
A'2: homopolycarbonate ("Taflon FN2200" manufactured by Idemitsu Kosan Co., Ltd., homopolycarbonate produced from bisphenol A, viscosity-average molecular weight= 21,300)

(2) Carbon fibers

B1: carbon fibers treated (coated) with an epoxy (special epoxy) based sizing agent ("Pyrophil ® Chopped Fiber TR06Q" manufactured by Mitsubishi Rayon Co., Ltd.)
B2: carbon fibers treated (coated) with an epoxy-based sizing agent ("Pyrofil ® Chopped Fiber TR066A" manufactured by Mitsubishi Rayon Co., Ltd.)
B'1: carbon fibers treated (coated) with a urethane-based sizing agent ("Pyrophil ® Chopped Fiber TR06U" manufactured by Mitsubishi Rayon Co., Ltd.)
B'2: carbon fibers treated (coated) with a polyamide-based sizing agent ("Pyrophil ® Chopped Fiber TR06NE" manufactured by Mitsubishi Rayon Co., Ltd.)

(3) Antioxidant

Phosphorus antioxidant ("Doverphos ® S9228PC" manufactured by Dover Chemical Corporation)

(Preparation Example 1) Preparation of Polycarbonate Oligomers

To a 5.6 % by mass of sodium hydroxide aqueous solution, 2000 ppm of sodium dithionite to bisphenol A (BPA) (dissolved therein later). BPA was dissolved in this solution so that BPA concentration was 13.5% by mass, to prepare a sodium hydroxide aqueous solution of BPA was prepared.
The sodium hydroxide aqueous solution of BPA was continuously passed through a tubular reactor having an inner diameter of 6 mm and a tube length of 30 m at a flow rate of 40 L/hr, methylene chloride at a flow rate of 15 L/hr, and phosgene at a flow rate of 4.0 kg/hr. The tubular reactor had a jacket portion, and the temperature of the reaction liquid was kept at 40°C or lower through cooling water to the jacket. The reaction liquid leaving the tubular reactor was continuously introduced into a baffled tank reactor with an inner volume of 40 L equipped with a retraction vane, and the reaction was carried out by adding a sodium hydroxide aqueous solution of BPA at a flaw rate of 2.8 L/hr, a 25% by mass sodium hydroxide aqueous solution at a flaw rate of 0.07 L/hr, water at a flow rate of 17 L/hr, and a 1% by mass triethylamine aqueous solution at a flow rate of 0.64 L/hr. The reaction liquid overflowing from the tank reactor was continuously withdrawn, the aqueous phase was separated off by standing, and the methylene chloride phase was collected.
The concentration of the polycarbonate oligomer thus obtained was 341 g/L, and the chloroformate group concentration was 0.71 mol/L.

(Preparation Example 2) Preparation of Polycarbonate-Polyorganosiloxane Copolymer (A1)

A 50 L tank reactor equipped with a baffle plate, a paddle-type stirring blade, and a cooling jacket, was charged

with 15 L of the polycarbonate oligomer solution prepared in Preparation Example 1,10.1 L of methylene chloride, 407 g of o-allylphenol-terminated modified polydimethylsiloxane (PDMS) which is a polydimethylsiloxane (polyorganosiloxane block (A-2)) having an average chain length n of 88, and 8.4 mL of triethylamine, 1065 g of a sodium hydroxide aqueous solution prepared by dissolving 85 g of sodium hydroxide in 980 mL of pure water, was added to the reactor under stirring, followed by reaction of the polycarbonate oligomer with the allylphenol-terminated modified PDMS for 20 minutes.

To this polymerization solution, a methylene chloride solution of p-tert-butylphenol (PTBP) (obtained by dissolving 70.4 g of PTBP in 1.0 L of methylene chloride) and a sodium hydroxide aqueous solution of bisphenol A (obtained by dissolving 1093 g of bisphenol A in an aqueous solution obtained by 618 g of sodium hydroxide and 2.1 g of sodium dithionite in 9.0 L of pure water) were added, and the polymerization reaction was carried out for 40 minutes.

To the reaction, 13 L of methylene chloride was added for dilution and stirred for 20 minutes, and then separated into an organic phase containing a polycarbonate-polydimethylsiloxane copolymer (PC-PDMS copolymer) and an aqueous phase containing excessive bisphenol A and sodium hydroxide, to isolate the organic phase.

Thus obtained methylene chloride solution of PC-PDMS copolymer was sequentially washed with 15% by volume of a 0.03 mol/L sodium hydroxide aqueous solution, and 0.2 mol/L of hydrochloric acid, and then washed repeatedly with pure water until the electric conductivity in the aqueous phase after washing became 5 $\mu$S/cm or less.

The methylene chloride solution of the PC-PDMS copolymer obtained by the washing was concentrated and pulverized, and the resulting flakes were dried at 120°C under reduced pressure to produce a PC-PDMS copolymer (A1).

The content of the PDMS block (polyorganosiloxane block (A-2)) determined by nuclear magnetic resonance (NMR) of the obtained PC-PDMS copolymer (A1) was 6.0% by mass, and the viscosity-average molecular weight Mv was 17,700.

3. Resin composition

(Examples 1 and 2 and Comparative Examples 1 to 5)

The components described above were blended in the amounts indicated in Table 1, and pellets of the resin composition were prepared using a twin-screw extruder (manufactured by Coperion Co., Ltd., ZSK type twin-screw extruder) at a cylinder temperature of 300°C. The respective property values described above were measured by using the obtained pellets. The results are shown in Table 1.

| | | | Example 1 | Example 2 | Comparative Example 1 | Comparative Example 2 | Comparative Example 3 | Comparative Example 4 | Comparative Example 5 |
|---|---|---|---|---|---|---|---|---|---|
| Composition [parts by mass] ([% by mass]) | Resin | A1 | 100 (80) | 100 (80) | 100 (80) | | | 100 (80) | |
| | | A' 1 | | | | 100 (80) | 100 (80) | | |
| | | A' 2 | | | | | | | 100 (80) |
| | Carbon fiber | B1 | 25 (20) | | | 25 (20) | | | 25 (20) |
| | | B2 | | 25 (20) | | | | | |
| | | B' 1 | | | 25 (20) | | 25 (20) | | |
| | | B' 2 | | | | | | 25 (20) | |
| | Antioxidant | | 0.13 (0.10) | 0.13 (0.10) | 0.13 (0.10) | 0.13 (0.10) | 0.13 (0.10) | 0.13 (0.10) | 0.13 (0.10) |
| Properties | Flow length [cm] | | 25 | 24 | 24 | 24 | 24 | 23 | 17 |
| | Standard deviation of flow length [cm] | | 0.1 | 0.1 | 0.1 | 0.1 | 0.1 | 0.1 | 0.1 |
| | Charpy impact strength [kJ/m$^2$] | | 11.3 | 10.6 | 10.0 | 7.9 | 8.0 | 9.6 | 8.4 |
| | Flexural modulus [GPa] | | 12 | 12 | 12 | 12 | 12 | 12 | 12 |

<Evaluation>

From Table 1, it can be seen that by the resin compositions of Examples, of flow length (fluidity), Charpy impact strength, and flexural modulus can be well balanced.

(Example 3 to 5) Blending ration of resint and carbon fiber

The components described above were blended in the amounts indicated in table 2, and pellets were prepared using a twin-screw extruder (TEM-37SS, manufactured by Shibaura Machinery Co., Ltd.) at a cylinder temperature of 300°C. The respective property values described above were measured by using the obtained pellets. The results are shown in Table 2, along with the results of Example 1.

Table 2

| | | | Example 1 | Example 3 | Example 4 | Example 5 |
|---|---|---|---|---|---|---|
| Composition [parts by mass] ([% by mass]) | Resin | A1 | 100 (80) | 100 (70) | 100 (60) | 100 (50) |
| | Carbon fiber | B1 | 25 (20) | 43 (30) | 67 (40) | 100 (50) |
| | Antioxidant | | 0.13 (0.10) | 0.14 (0.10) | 0.17 (0.10) | 0.20 (0.10) |
| Properties | Flow length [cm] | | 25 | 22 | 18 | 1 5 |
| | Standerd deviation of flow length [cm] | | 0.1 | 0.1 | 0.1 | 0 |
| | Charpy impact strength [kJ/m$^2$] | | 11.3 | 9.8 | 8.6 | 7.2 |
| | Flexural modulus [GPa] | | 12 | 1 7 | 21 | 26 |

From Table 2, it can be seen that by using the resin compositions of Examples, the balance of flow length (fluidity), Charpy impact strength, and flexural modulus can be adjusted by the blending ratio of the resin which is the PC-POS copolymer, and the carbon fiber in a state in which these properties are well balanced. Specifically, it can be seen that when increasing the blending amount of the carbon fiber to the resin, flexural modulus can be further increased, although flow length (fluidity) and Charpy impact strength are reduced. From another viewpoint, it can be seen that, although flexural modulus is decreased by reducing the amount of the carbon fiber to the resin, flow length (fluidity) and Charpy impact strength can be further increased.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which this application claims Paris convention priority are incorporated herein by reference in its entirety.

## Claims

**1.** A resin composition comprising:

a polycarbonate-polyorganosiloxane copolymer (A) comprising a polycarbonate block (A-1) comprising a repeating unit represented by the following general formula (I) and a polyorganosiloxane block (A-2) comprising a repeating unit represented by the following general formula (II); and

carbon fibers (B), the carbon fibers (B) being carbon fibers to which a compound having an epoxy group is attached:

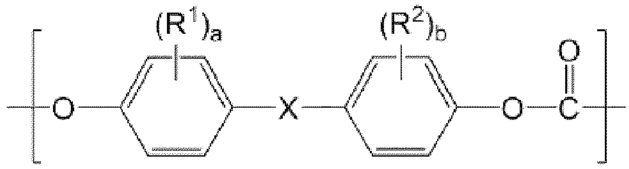

(I)

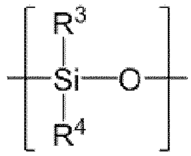

(II)

wherein in the formula (I), $R^1$ and $R^2$ each independently represent a halogen-atom, an alkyl group having 1 to 6 carbon atoms, or an alkoxy group having 1 to 6 carbon atoms;
Each of a and b independently represents an integer of 0 to 4; and
X represents a single bond, an alkylene group having 1 to 8 carbon atoms, an alkylidene group having 2 to 8 carbon atoms, a cycloalkylene group having 5 to 15 carbon atoms, an arylene group having 6 to 12 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O- or -CO-, and wherein in the formula (II), $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms.

**2.** The resin composition according to claim 1, wherein the content of the carbon fibers (B) is 10 to 200 parts by mass with respect to 100 parts by mass of the polycarbonate-polyorganosiloxane copolymer (A).

**3.** The resin composition according to claim 1 or 2, further comprising an antioxidant (C).

**4.** The resin composition according to claim 3, wherein the antioxidant (C) comprises at least one selected from the group consisting of a phosphorus-based antioxidant and a phenol-based antioxidant.

**5.** The resin composition according to claim 3 or 4, wherein the content of the antioxidant (C) is 0.001 parts by mass to 1.0% by mass with respect to 100 parts by mass of the polycarbonate-polyorganosiloxane copolymer (A).

**6.** The resin composition according to any one of claims 1 to 5, wherein the polyoiganosiloxane block (A-2) in the polycarbonate-polyorganosiloxane copolymer (A) has an average chain length n of 20 to 500.

**7.** The resin composition according to any one of claims 1 to 6, wherein the content of the polyoiganosiloxane block (A-2) in the polycarbonatepolyorganosiloxane copolymer (A) is 0.1 to 45% by mass.

**8.** The resin composition according to any one of claims 1 to 7, comprising the resin composition is the polycarbonate-polyorganosiloxane copolymer (A) and the carbon fiber (B) in an amount of 50% by mass or more.

**9.** A molded body comprising the resin composition according to any one of claims 1 to 8.

**10.** A method of improving a property of a resin composition comprising:

a polycarbonatepolyorganosiloxane copolymer (A) comprising a polycarbonate block (A-1) comprising a repeating unit represented by the following general formula (I) and a polyorganosiloxane block (A-2) comprising a repeating unit represented by the following general formula (II); and
carbon fibers (B), wherein
as the carbon fibers (B), carbon fibers to which a compound having an epoxy group is attached is used,

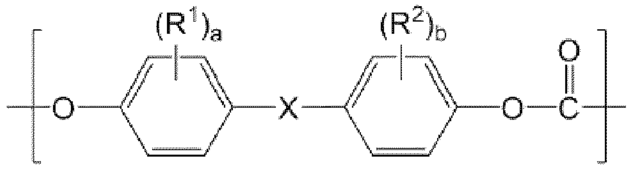

(I)

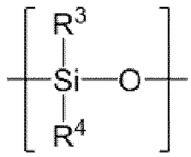

(II)

wherein in the formula (I), $R^1$ and $R^2$ each independently represent a halogen-atom, an alkyl group having 1 to 6 carbon atoms, or an alkoxy group having 1 to 6 carbon atoms;
Each of a and b independently represents an integer of 0 to 4; and
X represents a single bond, an alkylene group having 1 to 8 carbon atoms, an alkylidene group having 2 to 8 carbon atoms, a cycloalkylene group having 5 to 15 carbon atoms, an arylene group having 6 to 12 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O- or -CO-, and wherein in the formula (II), $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms.

**11.** The method according to claim 10, wherein the property is one or more selected from the group consisting of flow length, Charpy impact strength, and flexural modulus.

**INTERNATIONAL SEARCH REPORT**

International application No. PCT/JP2021/021363

A. CLASSIFICATION OF SUBJECT MATTER

Int.Cl. C08G81/00(2006.01)i, C08K7/06(2006.01)i, C08K9/04(2006.01)i, C08L69/00(2006.01)i, C08J5/04(2006.01)i, B29C70/06(2006.01)i
FI: C08L69/00, B29C70/06, C08G81/00, C08J5/04CEZ, C08K7/06, C08K9/04

According to International Patent Classification (IPC) or to both national classification and IPC

B. FIELDS SEARCHED

Minimum documentation searched (classification system followed by classification symbols)
Int.Cl. C08G81/00, C08K7/06, C08K9/04, C08L69/00, C08J5/04, B29C70/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2015-137308 A (TEIJIN LTD.) 30 July 2015 (2015-07-30), claims, paragraphs [0006], [0021]-[0040], [0052], [0097]-[0109], [0137]-[0149], examples | 1-11 |
| X | JP 2019-081819 A (CANON INC.) 30 May 2019 (2019-05-30), paragraphs [0083]-[0088], [0094], table 4, comparative example 1 | 1, 9 |
| A | JP 2006-188651 A (IDEMITSU KOSAN CO., LTD.) 20 July 2006 (2006-07-20), entire text | 1-11 |
| A | JP 7-258398 A (MITSUBISHI GAS CHEMICAL COMPANY, INC.) 09 October 1995 (1995-10-09), entire text | 1-11 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 July 2021 | Date of mailing of the international search report<br>03 August 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2021/021363

| | | |
|---|---|---|
| JP 2015-137308 A | 30 July 2015 | (Family: none) |
| JP 2019-081819 A | 30 May 2019 | (Family: none) |
| JP 2006-188651 A | 20 July 2006 | US 2009/0239983 A1<br>entire text<br>KR 10-2007-0085803 A<br>CN 101068881 A |
| JP 7-258398 A | 09 October 1995 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H264133 A
- JP H657640 A
- JP 2005036200 A
- JP 2015081333 A
- JP 2014080462 A
- JP 11217390 A
- WO 9100885 A
- JP 2016098292 A